# EUROPÄISCHE PATENTSCHRIFT

(11) **EP 4 184 030 B1**
(45) Veröffentlichungstag und Bekanntmachung des Hinweises auf die Patenterteilung: **11.09.2024**
(21) Anmeldenummer: 22203941.4
(22) Anmeldetag: 26.10.2022
(51) Int. Cl.: F16D 41/16, E05F 15/611

(54) **KUPPLUNG MIT EINEM ANTRIEB, EINEM ABTRIEB UND EINER SPERRKLINKE**
CLUTCH HAVING A DRIVE, A DRIVE, AND A PAWL
EMBRAYAGE COMPRENANT UN ENTRAÎNEMENT, UN ENTRAÎNEMENT ET UN CLIQUET

(30) Priorität: 18.11.2021 DE 102021130104
(43) Veröffentlichungstag der Anmeldung: 24.05.2023
(73) Patentinhaber: Grass GmbH, 64354 Reinheim (DE)
(72) Erfinder: Held, Wolfgang, 6971 Hard (AT)
(74) Vertreter: Otten, Roth, Dobler & Partner mbB Patentanwälte

(56) Entgegenhaltungen:
- CN-A- 113 357 284
- DE-A1- 102017 110 246

## Beschreibung

### Stand der Technik

Es sind bereits Sperrklinkenkupplungen bekannt, bei welchen ein Antrieb und ein Abtrieb in eine Drehrichtung koppeln und in die andere Drehrichtung entkoppeln. Nachteilig an den bekannten Kupplungen ist, dass die Kopplung des Antriebs mit dem Abtrieb nur in eine Drehrichtung stattfinden kann.

Aus der DE 10 2017 110246 A1 ist eine Kupplung mit einem Antrieb bekannt.

### Aufgabe und Vorteile der Erfindung

Aufgabe der Erfindung ist es, eine verbesserte Sperrklinkenkupplung mit einem Antrieb und einem Abtrieb bereitzustellen, insbesondere im Hinblick auf eine kompakte und einfache Bauweise.

Die Aufgabe wird durch die Merkmale der unabhängigen Ansprüche gelöst.

Vorteilhafte und zweckmäßige Ausführungsformen, Varianten und Weiterbildungen der Erfindung sind in den abhängigen Ansprüchen ausgeführt.

Die Erfindung geht aus von einer Kupplung mit einem Antrieb, einem Abtrieb und einer Sperrklinke.

Dabei sind der Antrieb, der Abtrieb und die Sperrklinke vorzugsweise als separate Bauteile ausgebildet. Der Antrieb, der Abtrieb und die Sperrklinken sind bevorzugterweise lösbar miteinander verbindbar.

Der Kern der Erfindung ist, dass die Sperrklinke mit dem Antrieb verbunden ist und zwischen Antrieb und Abtrieb angeordnet ist, wobei durch die Bewegung des Antriebs die Sperrklinke schwenkkbar ist, wobei die Sperrklinke derart ausgelegt ist, in beide Drehrichtungen eine Kopplung mit dem Abtrieb herbeizuführen, wenn der Antrieb eine Drehbewegung ausführt und eine Entkopplung ermöglicht ist, wenn der Antrieb steht und der Abtrieb eine Drehbewegung ausführt.

Weiter umfasst vorteilhafterweise der Antrieb ein Zahnradbereich, wobei der Zahnradbereich vorzugsweise als Hohlzylinder ausgebildet ist. Dabei weist die äußere Mantelfläche des Hohlzylinders des Zahnradbereichs des Antriebs vorzugsweise eine Zahnradkontur auf und die innere Mantelfläche des Hohlzylinders des Zahnradbereichs ist konkav ausgestaltet. Bevorzugterweise ist an der inneren Mantelfläche des Hohlzylinders des Zahnradbereichs eine ringförmige Platte angeordnet, welche umfänglich an der inneren Mantelfläche des Hohlzylinders des Zahnradbereichs anliegt. Die ringförmige Platte ist vorzugsweise höhenversetzt zur Zahnradkontur des Hohlzylinders des Zahnradbereichs am Antrieb ausgebildet. Weiter weist die Oberfläche, welche beispielsweise streifenförmig ist, der ringförmigen Platte in die gleiche Richtung, wie die Zahnradkontur des Hohlzylinders des Zahnradbereichs.

An der Oberfläche der ringförmigen Platte ist vorzugsweise zumindest eine Ausnehmungen zur Aufnahme der Sperrklinke ausgebildet. Die Länge der Ausnehmung erstreckt sich vorzugsweise axial zu einer Drehachse, um welche der Antrieb und der Abtrieb gedreht werden, an der Oberfläche der ringförmigen Platte. Die Drehachse verläuft bevorzugterweise mittig durch den Antrieb und Abtrieb. Die Oberfläche der ringförmigen Platte weist für die Ausnehmungen Aussparungen bzw. Lücken in der Oberfläche der ringförmigen Platte auf. Weiter folgt vorzugsweise an der Oberfläche der ringförmigen Platte ein kreisringförmiges Plattenelement, wobei die Oberfläche des kreisringförmigen Plattenelements senkrecht zur Oberfläche der ringförmigen Platte ausgerichtet ist. Bevorzugterweise ist ein Winkel von 85°-95° zwischen der Oberfläche der ringförmigen Platte und der Oberfläche des kreisringförmigen Plattenelements eingeschlossen. Der Durchmesser der inneren Mantelfläche des Hohlzylinders des Zahnradbereichs, wobei die innere Mantelfläche des Hohlzylinders des Zahnradbereichs gegenüberliegend zur Zahnradkontur ausgebildet ist, ist vorzugsweise größer als der Durchmesser einer Innenkontur des kreisringförmigen Plattenelements. Das kreisringförmige Plattenelement weist vorzugsweise zwei umlaufende Endkanten mit unterschiedlichen Radien auf, wobei eine Endkante mit der Oberfläche der ringförmigen Platte verbunden ist und die andere Endkante vorzugsweise die Innenkontur des kreisringförmigen Plattenelements aufweist. Die beiden Endkanten sind vorzugsweise gegenüberliegend an der kreisringförmigen Oberfläche des Plattenelements ausgestaltet.

In dem kreisringförmigen Plattenelement, insbesondere in der Oberfläche des kreisringförmigen Plattenelements, ist die Ausnehmung im Antrieb vorzugsweise halbkreisförmig bzw. konkav ausgebildet. Dabei entsteht eine Lücke bzw. Aussparung an der Endkante, welche mit der Oberfläche der ringförmigen Platte verbunden ist, so dass für die Sperrklinke eine Auflagefläche entsteht. Vorteilhafterweise ist die Ausnehmung in dem kreisringförmigen Plattenelement als Aussparung bzw. Lücke ausgebildet. Bevorzugterweise sind im Antrieb mehrere Ausnehmungen vorhanden, wobei die Anzahl der Ausnehmungen im Antrieb vorzugsweise auf die Anzahl der Sperrklinken abgestimmt ist. Dabei sind die Ausnehmungen gleichmäßig verteilt an der ringförmigen Platte und dem kreisringförmigen Plattenelements ausgebildet. Ist die Anzahl der Sperrklinken beispielsweise drei, dann sind die Ausnehmungen z.B. 120° voneinander beabstandet. Bevorzugterweise weist die Kupplung drei oder mehr Sperrklinken auf, die untereinander gleich vorzugsweise identisch ausgestaltet sind.

Vorteilhafterweise ist ein Teil des Abtriebs zwischen der Innenkontur des kreisringförmigen Plattenelements und der inneren Mantelfläche des Hohlzylinders des Zahnradbereichs des Antriebs aufgenommen. Ein Teil der Sperrklinken liegt vorzugsweise in der Ausnehmung des Antriebs auf, wobei ein anderer Teil der Sperrklinke zwischen dem Antrieb und dem Abtrieb angeordnet ist. Dabei kann die Sperrklinke durch eine Schwenkbewegung vorteilhafterweise mit dem Abtrieb koppeln oder entkoppeln.

Vorteilhafterweise ist der Antrieb in beide Drehrichtungen um eine Drehachse, z.B. durch einen Motor, drehbar, wobei bei der Drehbewegung des Antriebs die Sperrklinken in die Drehrichtung des Antriebs mitbewegbar sind. Dies geschieht dadurch, dass die Sperrklinken vorzugsweise fest mit dem Antrieb durch die Aufnahme der Sperrklinken in den Ausnehmungen des Antriebs verbunden sind. Dabei kann die Sperrklinke mit dem Abtrieb koppeln, so dass der Abtrieb durch die Sperrklinken vorteilhafterweise in die gleiche Richtung, wie der Antrieb drehbar ist.

Ist der Abtrieb vom Antrieb entkoppelt, koppelt die Sperrklinke nicht mit dem Abtrieb, so dass der Abtrieb vorteilhafterweise in beide Drehrichtungen relativ zum Antrieb bewegbar ist. Es findet vorteilhafterweise keine Antriebsbewegung über den Abtrieb statt.

Von Vorteil ist, dass die Kupplung einen einzigen Abtrieb aufweist, wobei der Abtrieb in beide Drehrichtungen drehbar ist.

Der Abtrieb ist vorzugsweise als ein einziges Bauteil ausgebildet. Bevorzugterweise weist der Abtrieb einen zylindrischen Bereich auf, wobei an einer kreisförmigen Grundfläche des zylindrischen Bereichs des Abtriebs beispielsweise ein Zahnrad mit Zahnradkontur ausgebildet ist. Der Abtrieb ist vorzugsweise in einem Innenraum des Antriebs angeordnet, wobei die Mantelfläche des zylindrischen Bereichs des Abtriebs vorteilhafterweise gegenüberliegend zur Oberfläche der ringförmigen Platte des Antriebs angeordnet ist. Vorteilhafterweise ist die Zahnradkontur des Abtriebs höhenversetzt bzw. in einer unterschiedlichen Ebene zur Zahnradkontur des Antriebs angeordnet. Die Zahnradkontur des Antriebs und die Zahnradkontur des Abtriebs sind vorteilhafterweise in die gleiche Richtung ausgerichtet. Bevorzugterweise überragt die Zahnradkontur des Abtriebs die Oberfläche des kreisringförmigen Plattenelements des Antriebs.

Vorteilhafterweise ist der Abtrieb symmetrisch, insbesondere drehsymmetrisch, ausgebildet, wobei beispielsweise der Abtrieb drehsymmetrisch zur Drehachse ist. Der Abtrieb ist vorteilhafterweise in beide Drehrichtungen drehbar. Vorteilhafterweise verläuft die Drehachse mittig durch den zylindrischen Bereich des Abtriebs, insbesondere parallel zur Höhe des zylindrischen Bereichs des Abtriebs. Durch die symmetrische Ausbildung des Abtriebs ist die Kopplung und Entkopplung mit dem Antrieb in beide Drehrichtungen möglich, wobei vorteilhafterweise nur ein einziger Abtrieb benötigt wird.

Von Vorteil ist, dass die Sperrklinke einen Verbindungabschnitt aufweist, wobei die Sperrklinke mittels des Verbindungsabschnitts am Antrieb angeordnet ist.

An den Sperrklinken ist vorzugsweise mittig ein Verbindungsabschnitt ausgebildet, mit welchem die Sperrklinke in der Ausnehmung des Antriebs aufgenommen ist. Bevorzugterweise ist die Form der Ausnehmung auf die Außenkontur des Verbindungsabschnitts angepasst. Der Bereich des Verbindungsabschnitts, welcher in der z.B. halbkreisförmigen Ausnehmung bzw. auf der Auflagefläche des Antriebs aufliegt, ist vorzugsweise konvex ausgebildet. Somit ist vorteilhafterweise gewährleistet, dass die Sperrklinken mit dem Verbindungsabschnitt in der Ausnehmung des Antriebs, z.B. passgenau anliegend, aufgenommen werden kann.

Weiter weist vorzugweise der Verbindungabschnitt der Sperrklinke einen Vorsprung auf, wobei der Vorsprung beispielsweise trapezförmig ausgestaltet ist. Der Verbindungsabschnitt liegt vorzugsweise mit seinem Vorsprung an einer Oberseite des Hohlzylinders des Zahnradbereichs an. Die Oberseite des Hohlzylinders des Zahnradbereichs ist bevorzugterweise senkrecht zur Zahnradkontur des Antriebs und parallel zur Oberfläche des kreisringförmigen Plattenelements ausgestaltet. Weiter ist beispielsweise der Vorsprung radial von der Drehachse in Richtung der Zahnradkontur des Antriebs ausgerichtet.

An dem Verbindungsabschnitt ist vorzugsweise eine beispielsweise konvexe Auflageoberflächen ausgebildet. Die Auflageoberfläche ist bevorzugterweise gegenüberliegend zum Bereich des Verbindungsabschnitts, welcher in der Ausnehmung im Antrieb aufliegt. Die Auflageoberfläche des Verbindungsabschnitts liegt vorzugsweise an der inneren Mantelfläche des Hohlzylinders des Zahnradbereichs an.

Vorteilhafterweise weist der Abtrieb eine Aussparung auf, wobei beim Kuppeln des Antriebs mit dem Abtrieb ein Klinkenabschnitt der Sperrklinke in die Aussparung eingreift.

Vorteilhafterweise weist der Abtrieb einen zylindrischen Bereich auf, wobei die Mantelfläche des zylindrischen Bereichs des Abtriebs zur Oberfläche der ringförmigen Platte des Antriebs ausgerichtet ist. An der Mantelfläche des zylindrischen Bereichs ist vorzugsweise die Aussparung ausgebildet, wobei bevorzugterweise mehrere Aussparungen an der Mantelfläche des zylindrischen Bereichs des Abtriebs ausgebildet sind. Die Aussparungen sind vorteilhafterweise gleichmäßig an der Mantelfläche des zylindrischen Bereichs des Abtriebs verteilt, wobei die Aussparungen vorzugsweise gleich ausgebildet sind. Die Aussparungen sind vorzugsweise vertieft bzw. versenkt in der Mantelfläche im Abtrieb ausgebildet, wobei die Aussparungen eine gleiche Tiefe, Länge und aufweisen. Dabei sind die Aussparungen bevorzugterweise gleich bzw. identisch untereinander in der Mantelfläche des Abtriebs ausgebildet.

Die Sperrklinke bzw. der Klinkenabschnitt der Sperrklinke ist vorzugsweise zwischen der Mantelfläche des zylindrischen Bereichs des Abtriebs und der streifenförmigen Oberfläche der ringförmigen Platte des Antriebs angeordnet, so dass der Klinkenabschnitt der Sperrklinke in eine Aussparung eingreifen kann. Der Klinkenabschnitt kann durch die Schwenkbewegung der Sperrklinke in die Aussparung am Abtrieb eingreifen, wodurch eine Kupplung des Antriebs mit dem Abtrieb herstellbar ist. Ebenfalls ist es von Vorteil, dass die Sperrklinke zwei Klinkenabschnitte aufweist, wobei die Klinkenabschnitte an zwei sich gegenüberliegenden Endbereichen der Sperrklinke angeordnet sind.

Die Sperrklinke weist vorzugsweise zwei Klinkenabschnitte auf, wobei die Klinkenabschnitte an umfänglich zur Drehachse gegenüberliegenden Enden der Sperrklinke angeordnet sind. Vorteilhafterweise ist die Sperrklinke derart ausgestaltet, dass der erste Klinkenabschnitt bei einer Drehung des Antriebs nach rechts in eine Aussparung am Abtrieb eingreift und der zweite Klinkenabschnitt bei einer Drehung des Antriebs nach links in eine Aussparung am Abtrieb eingreift.

Ebenfalls ist es vorteilhaft, dass die Kupplung ein feststehendes Abrollelement umfasst, wobei am Abrollelement eine Abrollfläche der Sperrklinke abrollt, wobei die Abrollfläche am Abrollelement in beide Drehrichtungen abrollbar ist, so dass die Sperrklinke in beide Drehrichtungen schwenkbar ist.

Bevorzugterweise ist eine Wälzfläche des Abrollelements zylindrisch ausgebildet. Das Abrollelement ist insbesondere als Hohlzylinder ausgebildet. Bevorzugterweise ist das Abrollelement an einer Grundfläche des zylindrischen Bereichs des Abtriebs angeordnet, wobei die Grundfläche gegenüberliegend zur Grundfläche ist, an der die Zahnradkontur am Antrieb ausgebildet ist. Das Abrollelement ist vorzugsweise fest und unbeweglich ausgebildet, wobei das Abrollelement beispielsweise fest an einem Möbelkorpus angeordnet ist.

Bevorzugterweise liegt an der Wälzfläche des Abrollelements die Abrollfläche der Sperrklinke auf. Die Abrollfläche der Sperrklinke liegt bevorzugterweise dauerhaft am Abrollelement bzw. an der Wälzfläche des Abrollelements an. Die Abrollfläche der Sperrklinke, welche an dem Abrollelement aufliegt, ist bevorzugterweise konvex ausgestaltet, so dass der konvexe Bereich der Abrollfläche der Sperrklinke auf der konvexen Wälzfläche des Abrollelements aufliegt. Dadurch kann vorteilhafterweise die Abrollfläche der Sperrklinke in beide Drehrichtung am Abrollelement abrollen, so dass die Sperrklinke in beide Drehrichtungen verschwenkbar ist. Dabei kann vorzugsweise die Sperrklinke bzw. die Klinkenabschnitte der Sperrklinke in die Ausnehmung im Abtrieb hereingeschwenkt oder herausgeschwenkt werden. So kann vorteilhafterweise die Kopplung und die Entkopplung des Antriebs mit dem Abtrieb in beide Drehrichtungen erfolgen.

Vorteilhafterweise ist im entkoppelten Zustand der Kupplung der Klinkenabschnitt der Sperrklinke nicht im Eingriff mit der Aussparung des Abtriebs.

Im entkoppelten Zustand der Kupplung kann bevorzugterweise der Abtrieb unabhängig vom Antrieb in beide Drehrichtungen bewegt werden. Zum Entkoppeln der Kupplung sollte der Antrieb in entgegengesetzter Richtung zur vorangegangenen Drehrichtung kurz gedreht werden, so dass die Klinkenabschnitte der Sperrklinke verschwenkt werden und nicht mehr im Eingriff mit den Aussparungen am Abtrieb sind. Dies geschieht beispielsweise in dem die Drehrichtung eines Motors, insbesondere eines elektrischen Motors, geändert bzw. umgekehrt wird.

Weiter können die Klinkenabschnitte der Sperrklinke aus den Aussparungen herausbewegt bzw. herausgeschwenkt werden, wenn der Abtrieb schneller als der Antrieb in Drehrichtung bewegt wird oder wenn der Antrieb stehen bleibt und der Abtrieb bewegt wird.

Vorteilhafterweise weist die Kupplung ein Federelement auf, wobei das Federelement die Sperrklinke gegen das Abrollelement drückt.

Das Federelement ist vorzugsweise als annähernd kreisförmiger Federdraht ausgebildet, wobei das Federelement einen Abstand zwischen Anfangsabschnitt und Endabschnitt aufweist, so dass das Federelement verengt und geweitet werden kann. Das Federelement liegt vorzugsweise auf der Auflageoberfläche des Verbindungsabschnitts der Sperrklinke auf. Das Federelement ist vorzugsweise in Richtung des Abtriebs geladen bzw. vorgespannt, wodurch die Sperrklinke bzw. die Abrollfläche der Sperrklinke gegen das Abrollelement bzw. die Wälzfläche des Abrollelements gedrückt, insbesondere dauerhaft gedrückt, wird.

Vorteilhafterweise ist das Federelement zwischen dem Vorsprung des Verbindungsabschnitts der Sperrklinke und der Oberseite des Hohlzylinders des Zahnradbereichs des Antriebs angeordnet. Dadurch ist vorteilhafterweise gewährleistet, dass das Federelement zwischen Antrieb und Sperrklinke eingeklemmt ist und die Sperrklinke beispielsweise dauerhaft gegen das Abrollelement drückt.

Auch ist es vorteilhaft, dass der Abtrieb eine Führungsbahn aufweist, wobei ein Führungsabschnitt der Sperrklinke in der Führungsbahn des Abtriebs angeordnet ist.

Bevorzugterweise ist die Führungsbahn als rillenförmige Vertiefung im Abtrieb ausgebildet. Die Vertiefung der Führungsbahn ist vorzugsweise ringförmig und an einer Grundfläche des zylindrischen Bereichs des Abtriebs vertieft ausgebildet. Die Grundfläche, welche die Führungsbahn aufweist, ist vorzugsweise gegenüberliegend zur Grundfläche an welcher das Zahnrad mit Zahnradkontur des Abtriebs ausgebildet ist. Beispielsweise liegt an einem Randabschnitt der Vertiefung der Führungsbahn das Abrollelement an. Die Vertiefung weist vorzugsweise zwei kreisförmige Randabschnitte auf, wobei der Randabschnitt, an welchem das Abrollelement anlieft, beispielsweise radial näher zur Drehachse ist.

Der Führungsabschnitt der Sperrklinke taucht vorteilhafterweise in die Führungsbahn ein und wird beispielsweise komplett in der Führungsbahn aufgenommen. Der Führungsabschnitt der Sperrklinke hat vorzugsweise eine annähernd dreieckige Form bzw. ist annähernd als gleichschenkliges Dreieck ausgebildet, wobei die Schenkel leicht nach außen gewölbt bzw. konvex sind. Die dritte Seite des Führungsabschnitts weist vorzugsweise die Abrollfläche auf.

Auch ist es vorteilhaft, dass die Sperrklinke spiegelsymmetrisch ausgebildet ist.

Vorteilhafterweise verläuft die Spiegelebene mittig durch den Verbindungsabschnitt und den Führungsabschnitt, so dass die Spiegelebene die Sperrklinke in zwei gleiche Hälften teilt. Durch die Spiegelsymmetrie der Sperrklinke und der drehsymmetrischen Ausbildung des Abtriebs ist es vorteilhafterweise möglich, dass die Kopplung des Antriebs mit dem Abtrieb durch die Sperrklinke in beide Drehrichtungen erfolgen kann.

Eine vorteilhafte Ausführungsform der Erfindung ist eine Antriebsvorrichtung mit einem elektrischen Motor zum Bewegen eines beweglichen Möbelteils relativ zu einem Möbelkorpus, wobei das Drehmoment des Motors auf ein Möbelbeschlag übertragbar ist, wobei die Drehbewegung des Motors eine Bewegung des Möbelbeschlags und damit des beweglichen Möbelteils in Öffnungs- und Schließrichtung bewirkt, wobei die Antriebsvorrichtung eine Kupplung nach einer der vorangegangen beschriebenen Ausführungen aufweist.

Vorteilhafterweise ist die Antriebsvorrichtung am Möbelbeschlag vormontiert. Vorstellbar ist es auch die Antriebsvorrichtung nachträglich an einen bestehenden Möbelbeschlag, der ohne Antriebsvorrichtung bzw. herkömmlich gestaltet ist, zu montieren. Der Möbelbeschlag ist vorzugsweise für eine Klappe, insbesondere Oberklappe, oder Schranktüre ausgebildet. Bevorzugterweise weist die Antriebsvorrichtung für das Anbringen an den Möbelbeschlag ein Kopplungselement auf, welches z.B. über Schrauben mit einem Gehäuse des Möbelbeschlags verbindbar ist. Das Kopplungselement kann beispielsweise als Platte oder Gehäuse ausgebildet sein, wobei vorzugsweise die Bestandteile der Antriebsvorrichtung an dem oder in dem Kopplungselement aufgenommen sind. Bevorzugterweise ist das Abrollelement der Kupplung fest mit dem Gehäuse bzw. dem Kopplungselement der Antriebsvorrichtung verbunden. Vorteilhafterweise weist der Möbelbeschlag ein Gehäuse auf, wobei das Gehäuse des Möbelbeschlags als auch das Kopplungselement z.B. in einer Vertiefung in einer Seitenwand des Möbelkorpus aufnehmbar ist, insbesondere so dass das Gehäuse des Möbelbeschlags und das Kopplungselements bündig mit der Oberfläche der Seitenwand abschließen bzw. gering versenkt zur Oberfläche der Seitenwand sind.

Bevorzugterweise weist die Antriebsvorrichtung ein Getriebe auf, wobei das Getriebe vorzugsweise zumindest ein Übertragungselement, wie. z.B. ein Zahnrad, aufweist. Bevorzugterweise weist das Getriebe mehrere Übertragungselemente auf. Die Übertragungselemente sind vorzugsweise als Doppelzahnrad ausgebildet.Bei einem Doppelzahnrad sind vorzugsweise ein größeres Zahnrad und ein kleineres Zahnrad übereinander angeordnet.

Vorteilhafterweise ist das Drehmoment des Motors auf das Getriebe übertragbar, wobei nach dem Motor abtriebseititg vorzugsweise Übertragungselemente folgen, wobei ein Übertragungselement bevorzugterweise in die Kupplung eingreift. Weiter ist vorstellbar, dass die Antriebsvorrichtung kein Getriebe aufweist, sondern beispielsweise eine Antriebswelle des Motors direkt in die Kupplung eingreift bzw. auf die Kupplung wirkt zur Drehmomentsübertragung.

Bevorzugterweise weist die Antriebsvorrichtung einen Hebel auf, wobei der Hebel vorteilhafterweise mit einem Teil des Möbelbeschlags verbindbar, insbesondere lösbar verbindbar ist, beispielsweise über Verbindungsmittel, wie z.B. Schrauben. Beispielsweise kann der Hebel mit einem Arm bzw. Schwenkarm des Möbelbeschlags verbunden werden. Der Hebel ist bevorzugterweise nach der Kupplung angeordnet und vorzugsweise mit dem Abtrieb der Kupplung verbunden. Nach der Kupplung kann auch ein weiteres Übertragungselement folgen, wobei dann der Hebel vorzugsweise mit dem Übertragungselement verbunden ist. Dabei wird der Hebel vorzugsweise durch die Drehbewegung des Übertragungselements oder der Kupplung verschwenkt. Somit ist der Hebel an einem Ende mit dem Arm bzw. Schwenkarm des Möbelbeschlags und an dem anderen Ende mit dem Übertragungselement oder mit der Kupplung, insbesondere dem Abtrieb der Kupplung, verbunden, vorzugsweise lösbar verbunden. Der Hebel der Antriebsvorrichtung kann auch nachträglich mit dem Arm des Möbelbeschlags verbunden werden. Somit kann vorteilhafterweise ein Möbel nachträglich mit einer Antriebsvorrichtung zum motorischen Bewegen des Möbelbeschlags bzw. des beweglichen Möbelteils ausgestattet werden.

Die Drehbewegung des Motors wird auf das Getriebe im Betrieb übertragen, wobei der Hebel bewegt wird, wodurch mittels des Möbelbeschlags das bewegliche Möbelteil in Öffnung- und Schließrichtung bewegbar ist. Bevorzugterweise wird eine Drehbewegung des Motors über das Getriebe auf den Antrieb der Kupplung übertragen, wobei in der gekoppelten Stellung der Kupplung die Drehbewegung vom Antrieb über das Federelement auf den Abtrieb übertragen wird, wobei der Abtrieb die Drehbewegung auf den Hebel und somit auf den Möbelbeschlag überträgt. Bevorzugterweise wird über die Drehbewegung des Möbelbeschlags bzw. eines drehbaren Teils des Möbelbeschlags das bewegliche Möbelteil in Öffnungs- und Schließrichtung bewegt, je nach Drehrichtung des Teils des Möbelbeschlags. Vorteilhafterweise kann der Motor in beide Drehrichtungen rotieren, so dass der Möbelbeschlag bzw. das bewegliche Möbelteil über die Antriebsvorrichtung in Öffnungs- und Schließrichtung angetrieben bewegbar ist.

Eine weitere vorteilhafte Ausführungsform der Erfindung ist eine Beschlaganordnung mit einem Möbelbeschlag zum Bewegen eines beweglichen Möbelteils relativ zum Möbelkorpus und einer Antriebsvorrichtung nach einer der vorangegangen beschriebenen Ausführungen zum angetriebenen Bewegen des Möbelbeschlags.

Die Beschlaganordnung umfasst vorzugsweise einen Möbelbeschlag und die Antriebsvorrichtung, wobei bevorzugterweise der Hebel der Antriebsvorrichtung mit einem Arm, insbesondere einem Schwenkarm, des Möbelbeschlags verbunden ist. Dadurch kann vorteilhafterweise die vom Motor erzeugte Drehbewegung einer Antriebswelle des Motors durch den Hebel auf den Möbelbeschlag übertragen werden, wodurch der Möbelbeschlag angetrieben bewegbar ist. Bevorzugterweise kann die Bewegung des Möbelbeschlags auf das bewegliche Möbelteil in Öffnungs- und Schließrichtung übertragen werden, so dass das bewegliche Möbelteil angetrieben abhängig von der Drehrichtung in Öffnungs- und Schließrichtung bewegbar ist.

Bevorzugterweise ist zwischen dem Hebel und dem elektrischen Motor ein Getriebe mit mehreren Übertragungselementen und zumindest eine Kupplung angeordnet, wobei die Drehbewegung des Motors über die Übertragungselemente und der gekoppelten Kupplung auf den Hebel übertragen werden kann, wodurch der Möbelbeschlag verschwenkt oder linear bewegt werden kann. Der Möbelbeschlag weist vorzugsweise mehrere Arme bzw. Schwenkarme auf, wobei zumindest ein Schwenkarm mit dem beweglichen Möbelteil und zumindest ein Schwenkarm mit dem Möbelkorpus verbunden ist. Bevorzugterweise verursacht die Bewegung, wie z.B. eine Schwenkbewegung, eines Arms bzw. Schwenkarms des Möbelbeschlags die Bewegung der anderen Arme bzw. Schwenkarme. Die Arme bzw. die Schwenkarme des Möbelbeschlags sind vorzugsweise schwenkbar miteinander verbunden.

Vorstellbar ist, dass eine Bedienperson die Öffnungs- und Schließbewegung des beweglichen Möbelteils durch Aktivieren des elektrischen Motors auslöst. Das Aktivieren des elektrischen Motors kann über ein Auslösen einen Schalters erfolgen, beispielsweise kann ein Schalter an einer Stirnseite einer Wand des Möbelkorpus angeordnet sein, wobei beim Andrücken des beweglichen Möbelteils durch die Bedienperson gegen den Möbelkorpus der Schalter aktiviert wird. Eine weitere Möglichkeit besteht darin, dass eine Bedienperson den elektrischen Motor über eine Fernbedienung aktiviert.

Eine weitere vorteilhafte Ausführungsform der Erfindung ist ein Möbel mit einer Beschlaganordnung nach einer der vorangegangen beschriebenen Ausführungen, wobei durch die Beschlaganordnung ein bewegliches Möbelteil relativ zu einem Möbelkorpus motorisch angetrieben bewegbar ist.

### Figurenbeschreibung

Weitere Merkmale und Vorteile der Erfindung sind anhand eines in den Figuren schematisiert dargestellten Ausführungsbeispiels näher erläutert.

Im Einzelnen zeigt:
- Figur 1: eine perspektivische Ansicht auf ein Möbel mit einem Möbelbeschlag zur Bewegung eines geöffnet dargestellten beweglichen Möbelteils des Möbels,
- Figur 2: eine Seitenansicht auf eine erfindungsgemäße Beschlaganordnung ohne eine Abdeckung der Beschlaganordnung,
- Figur 3: eine Explosionsdarstellung einer Kupplung der Beschlaganordnung gemäß Fig. 2,
- Figur 4: eine perspektivische Ansicht von schräg oben auf eine Vorderseite der zusammengebauten Kupplung gemäß Figur 3 in gekoppelter Stellung bei einer Drehung in eine erste Drehrichtung,
- Figur 5: eine perspektivische Ansicht von schräg oben auf eine Rückseite der Kupplung gemäß Figur 4 in gekoppelter Stellung bei einer Drehung in eine erste Drehrichtung,
- Figur 6: eine perspektivische Ansicht von schräg oben auf eine Vorderseite der Kupplung gemäß Figur 4 in nicht gekoppelter Stellung,
- Figur 7: eine perspektivische Ansicht von schräg oben auf eine Rückseite der Kupplung gemäß Figur 5 in nicht gekoppelter Stellung,
- Figur 8: eine perspektivische Ansicht von schräg oben auf eine Vorderseite der Kupplung gemäß Figur 4 und 6 in gekoppelter Stellung bei einer Drehung in eine zweite Drehrichtung,
- Figur 9: eine perspektivische Ansicht von schräg oben auf eine Rückseite der Kupplung gemäß Figur 5 und 7 in gekoppelter Stellung bei einer Drehung in eine zweite Drehrichtung.

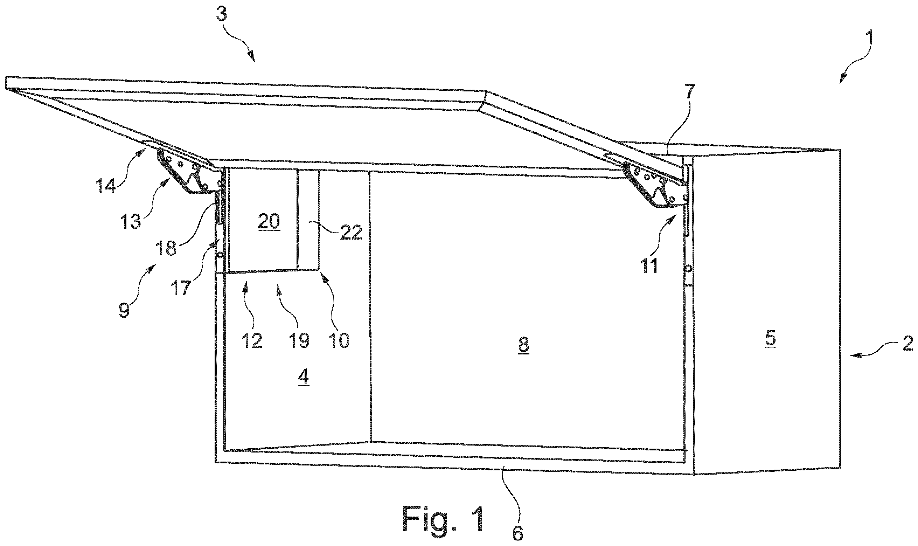

Fig. 1 zeigt perspektivisch ein Möbel 1 mit einem kastenförmigen Möbelkorpus 2 und einem daran aufgenommenen beweglichen Möbelteil 3, welches vorzugsweise als Klappe bzw. Oberklappe ausgebildet, und in einer Offenstellung relativ zum Möbelkorpus 2 gezeigt ist. Das Möbel 1 ist beispielsweise als Oberklappenschrank ausgebildet z.B. an einer Wand hängend befestigt.

Der vorne offene Möbelkorpus 2 umfasst zwei gegenüberliegende aufrechte Seitenwände 4 und 5, die unten mit einem Unterboden 6 und oben mit einem Oberboden 7 verbunden sind. Rückseitig ist der Möbelkorpus 2 von einer Rückwand 8 verschlossen. Zur Bewegung des beweglichen Möbelteils 3 um eine horizontale Schwenkachse, relativ zum Möbelkorpus 2 aus der in Fig. 1 gezeigten Offenstellung in eine zum Möbelkorpus 2 frontseitig heranbewegte Schließstellung (nicht gezeigt) und zurück in die Offenstellung gemäß Fig. 1 ist ein Möbelbeschlag 9 vorhanden, welcher vorzugsweise als Oberklappenbeschlag ausgestaltet ist. Der Möbelbeschlag 9 weist an der Seitenwand 4 eine erste Beschlageinheit 10 und an der Seitenwand 5 eine zweite Beschlageinheit 11 auf. Die Beschlageinheiten 10, 11 sind gleichartig und zur funktionsrichtigen Anordnung an der jeweiligen Seitenwand 4 bzw. 5 seitenbezogen aufgebaut.

Jede Beschlageinheit 10 und 11 umfasst eine Basiseinheit 12, eine Schwenkarm-Anordnung 13 und eine Montageeinheit 14. Über mehrere gelenkig gelagerte Schwenkarme 15 der Schwenkarm-Anordnung 13 ist die Basiseinheit 12 mit der Montageeinheit 14 verbunden, wobei die Montageeinheit 14 fest an einer Innenseite des beweglichen Möbelteils 3 beispielsweise versenkt in einer Materialausnehmung des beweglichen Möbelteils 3 befestigt ist. Die Basiseinheit 12 ist vorzugsweise als ein Gehäuse 19 ausgebildet und umfasst eine ebene, flache bzw. dünne Grundplatte 16 und ein der Grundplatte 16 gegenüberliegendes Abdeckbauteil 20. Weiter ist vorzugsweise stirnseitig an der Basiseinheit 12 ein Stirnabschnitt 17 vorhanden, dessen Außenseite quer zur Ebene der Grundplatte 16 ausgerichtet ist. Durch eine rechteckförmige Aussparung 18 in dem Stirnabschnitt 17 greifen bevorzugterweise zumindest ein betreffender Schwenkarm 15 der Schwenkarm-Anordnung 13.

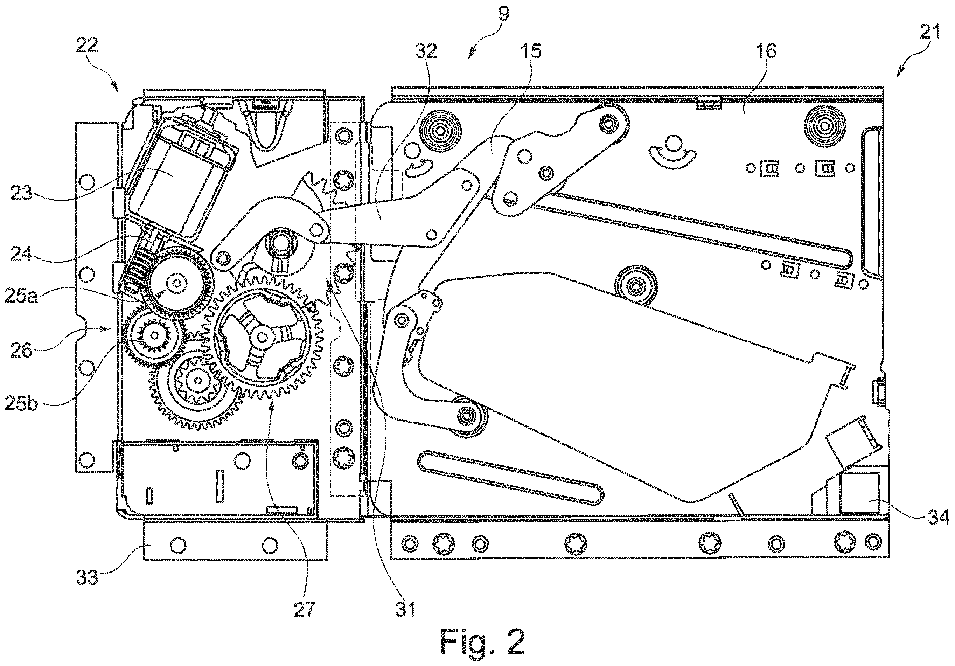

In der Figur 2 ist eine Beschlaganordnung 21 dargestellt, welche den Möbelbeschlag 9 und eine Antriebsvorrichtung 22 umfasst. Die Antriebsvorrichtung 22 weist dabei einen Motor 23, vorzugsweise einen elektrischen Motor auf, welcher vorzugsweise eine angetrieben rotierbare Antriebswelle 24 aufweist, wobei die Antriebswelle 24 in beide Drehrichtungen rotierbar bzw. drehbar im Betrieb des Motors 23 ist. An der Antriebswelle 24 des Motors 23 ist vorzugsweise eine Übertragungskontur z.B. eine Schneckenwelle mit einer Schneckenkontur angeordnet. Die Übertragungskontur kommt vorzugsweise in Eingriff mit einem Übertragungselement 25a, 25b eines Getriebes 26 der Antriebsvorrichtung 22. Das Übertragungselement 25a, 25b ist vorzugsweise als Zahnrad, insbesondere als Doppelzahnrad, ausgebildet, wobei beispielsweise die Übertragungskontur der Antriebswelle 24 des Motors 23 in Eingriff mit einer Zahnradkontur des Übertragungselements 25a des Getriebes 26 kommt. Das Getriebe 26 weist vorzugsweise mehrere Übertragungselemente 25a, 25b auf, wobei die Übertragungselemente 25a, 25b vorzugsweise ein Antriebszahnrad und ein Abtriebszahnrad aufweisen. Bevorzugterweise kommt ein Abtriebszahnrad eines ersten Übertragungselements 25a in Eingriff mit einem Antriebszahnrad eines zweiten Übertragungselements 25b.

Die Antriebsvorrichtung 22 weist weiterhin bevorzugterweise eine Kupplung 27 auf, wobei beispielsweise ein Abtriebszahnrad eines Übertragungselements 25 in Eingriff mit einem Antrieb 28 der Kupplung kommt. Die Kupplung 27 weist vorzugsweise den Antrieb 28, einen Abtrieb 29 und eine Sperrklinke 30 auf. Im gekoppelten Zustand der Kupplung 27 wird ein Drehmoment vom Antrieb 28 durch die Sperrklinke 30 auf den Abtrieb 29 übertragen. Vor der Kupplung 27 kann beispielsweise eine weitere Kupplung, insbesondere eine Überlastkupplung, oder ein weiteres Übertragungselement 25 angeordnet sein. Bevorzugterweise ist nach der Kupplung 27 ein weiteres Zahnrad 31 angeordnet, welches insbesondere als teilumfängliche Zahnscheibe ausgebildet ist. Vorzugsweise ist an dem Zahnrad 31 ein Hebel 32 der Antriebsvorrichtung 22 befestigt. Dabei kann eine Drehbewegung von den Motor 23 auf das Getriebe 26, von dem Getriebe 26 auf die Kupplung 27, und bei gekoppelten Zustand der Kupplung 27 von der Kupplung 27 auf das Zahnrad 31 und von dem Zahnrad 31 auf den Hebel 32 übertragen werden. Der Hebel 32 ist vorzugsweise mit einem Schwenkarm 15 der Schwenkarmanordnung 13 des Möbelbeschlags 9 verbunden, so dass durch die Bewegung des Hebels 32 der Schwenkarm 15 bzw. die Schwenkarme der Schwenkarmanordnung 13 bewegt werden, wodurch das bewegbare Möbelteil 3 in Öffnungs- und Schließrichtung angetrieben bewegt wird abhängig von der Drehrichtung des Motors.

Bevorzugterweise ist der Hebel 32 lösbar mit dem Schwenkarm 15 verbunden, so dass die Antriebsvorrichtung 22 direkt oder auch nachträglich an eine am Möbel 1 montierten Möbelbeschlag 9 angebracht werden kann. Bevorzugterweise sind der Motor 23, das Getriebe 26, die Kupplung 27 an einem Kopplungselement 33 angeordnet, wobei das Kopplungselement 33 vorzugsweise z.B. über Anbindungsorgane mit der Grundplatte 16 der Basiseinheit 12 des Möbelbeschlags 9 verbunden werden kann. Weiter ist bevorzugt, dass die Basiseinheit 12 des Möbelbeschlags 9 und das Kopplungselement 33 der Antriebsvorrichtung 22 mittels eines Abdeckbauteils 20 abgedeckt werden, so dass die Bestanteile des Möbelbeschlags 9 und der Antriebsvorrichtung 22 von außen nicht sichtbar sind, dies erhöht die Ästhetik des Möbels. Dafür können die Basiseinheit 12 des Möbelbeschlags 9 und das Kopplungselement 33 der Antriebsvorrichtung 22 mittels eines einzigen Abdeckbauteils 20 verdeckt werden oder die Basiseinheit 12 des Möbelbeschlags 9 und das Kopplungselement 33 der Antriebsvorrichtung 22 weisen jeweils ein Abdeckbauteil auf. Die Basiseinheit 12 des Möbelbeschlags 9 und das Kopplungselement 33 der Antriebsvorrichtung 22 sind vorzugsweise in einer passend vorbereiteten Vertiefung in der Seitenwand 4, 5 des Möbelkorpus 2 eingelassen, so dass das Abdeckelement bzw. die Abdeckelemente mit der Oberfläche der Seitenwand 4, 5 des Möbelkorpus 2 bündig abschließen oder zumindest nur wenig überstehen.

Weiter kann an der Grundplatte 16 der Basiseinheit 12 ein Schalter 34 angeordnet sein, welcher bevorzugterweise an dem Stirnabschnitt 17 ausgebildet ist, so das der Schalter 34 durch ein Andrücken des beweglichen Möbelteils 3 an den Möbelkorpus 2 ausgelöst werden kann. Das Andrücken des beweglichen Möbelteils 3 an den Möbelkorpus 2 kann durch einen Nutzer erfolgen. Der Schalter 34 ist vorzugsweise mit dem Motor 23 verbunden, insbesondere über ein Kabel oder Funk, so dass ein Auslösen des Schalters 34 den Motor 23 aktiviert. Der Schalter 34 kann vorzugsweise auch manuell ausgelöst werden.

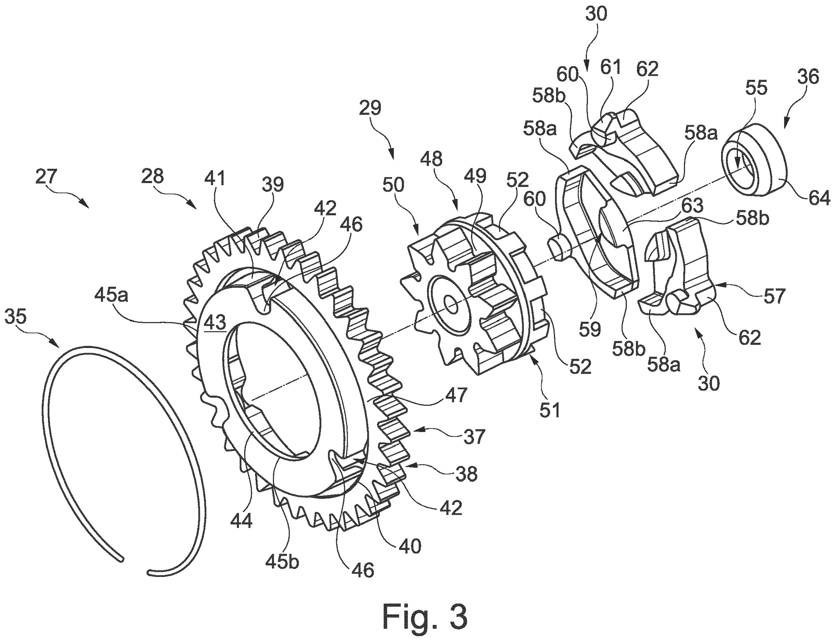

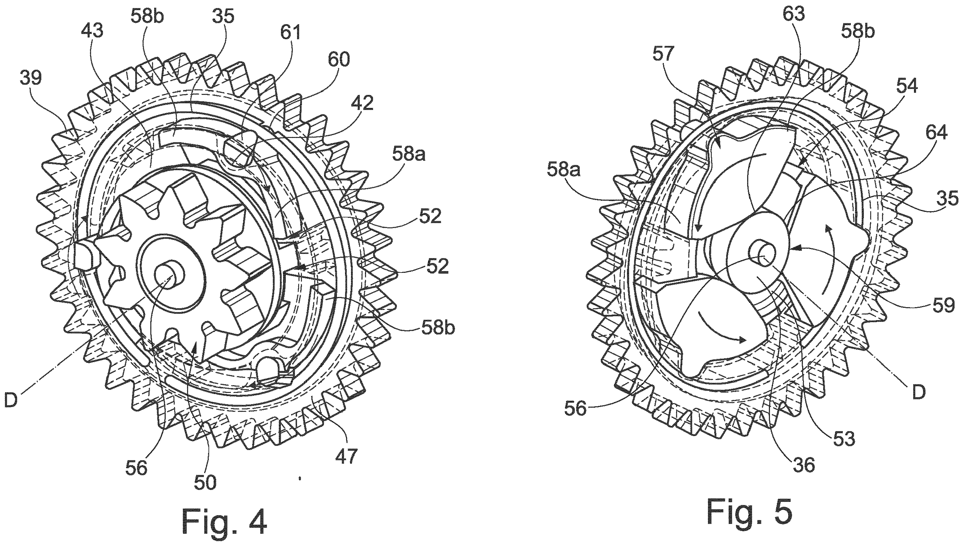

In der Figur 3 sind die Bestandteile der Kupplung 27 dargestellt, wobei die Kupplung 27 den Antrieb 28, den Abtrieb 29, die Sperrklinken 30, ein Federelement 35 und ein Abrollelement 36 umfasst. Der Antrieb 28, der Abtrieb 29 und die Sperrklinken 30 sind um eine Drehachse D drehbar, wobei die Drehachse D mittig durch die Kupplung 27 verläuft (s. Fig. 4 und 5).

Der Antrieb 28 umfasst vorzugsweise einen Zahnradbereich 37, welcher vorzugsweise als Hohlzylinder 38 ausgebildet ist. Dabei weist die äußere Mantelfläche des Hohlzylinders 38 des Zahnradbereichs 37 vorzugsweise eine Zahnradkontur 39 auf und die innere Mantelfläche 40 des Hohlzylinders 38 des Zahnradbereichs 37 ist vorzugsweise konkav ausgestaltet. Der Hohlzylinder 38 des Zahnradbereichs 37 weist vorzugsweise eine Oberseite 47 auf, welche bevorzugterweise senkrecht zur Zahnradkontur 39 ausgestaltet ist. Bevorzugterweise verbindet die Oberseite 47 die Zahnradkontur 39 mit der inneren Mantelfläche 40 des Hohlzylinders 38 des Zahnradbereichs 37. Bevorzugterweise ist an der inneren Mantelfläche 40 des Hohlzylinders 38 des Zahnradbereichs 37 eine ringförmige Platte 41 angeordnet. Die ringförmige Platte 41 ist vorzugsweise höhenversetzt zur Zahnradkontur 39 des Hohlzylinders 38 des Zahnradbereichs 37 am Antrieb 28 ausgebildet. Weiter weist eine Oberfläche der ringförmigen Platte 41 in die gleiche Richtung wie die Zahnradkontur 39 des Hohlzylinders 38 des Zahnradbereichs 37.

Es folgt vorzugsweise an der Oberfläche der ringförmigen Platte 41 ein kreisringförmiges Plattenelement 43, wobei die Oberfläche des kreisringförmigen Plattenelements 43 senkrecht zur Oberfläche der ringförmigen Platte 41 ausgerichtet ist. Bevorzugterweise ist ein Winkel von 85°-95° zwischen der Oberfläche der ringförmigen Platte 41 und der Oberfläche des kreisringförmigen Plattenelements 43 eingeschlossen. Vorzugsweise ist der Durchmesser der inneren Mantelfläche 40 des Hohlzylinders 38 des Zahnradbereichs 37, wobei die innere Mantelfläche 40 des Hohlzylinders 38 des Zahnradbereichs 37 gegenüberliegend zur Zahnradkontur 39 ausgebildet ist, größer als der Durchmesser einer Innenkontur 44 des kreisringförmigen Plattenelements 43. Das kreisringförmige Plattenelement 43 weist vorzugsweise zwei Endkanten 45a, 45b auf, wobei eine Endkante 45a mit der Oberfläche der ringförmigen Platte 41 verbunden ist und die andere Endkante 45b weist vorzugsweise die Innenkontur 44 des kreisringförmigem Plattenelements auf, die beiden Endkanten 45a, 45b sind vorzugsweise gegenüberliegend an der kreisringförmigen Oberfläche des Plattenelements 43 ausgestaltet.

Die Ausnehmung 42 im Antrieb 28 ist vorzugsweise halbkreisförmig in dem kreisringförmigen Plattenelement 43 ausgebildet, so dass für die Sperrklinke 30 eine Auflagefläche 46 entsteht. Bevorzugterweise sind im Antrieb 28 drei Ausnehmungen 42 vorhanden, wobei dies der Anzahl der Sperrklinken 30 entspricht. Dabei sind die Ausnehmungen 42 gleichmäßig verteilt an der ringförmigen Platte 41 und dem kreisringförmigen Plattenelements 43 ausgebildet, wobei die Ausnehmungen 42 120° voneinander beabstandet sind.

Bevorzugterweise weist der Abtrieb 29 einen zylindrischen Bereich 48 auf, wobei an einer kreisförmigen Grundfläche 49 des zylindrischen Bereichs 48 des Abtriebs 29 ein Zahnrad mit Zahnradkontur 50 ausgebildet ist. An einer Mantelfläche 51 des zylindrischen Bereichs 48 sind vorzugsweise Aussparungen 52 ausgebildet, wobei die Aussparungen 52 gleichmäßig an der Mantelfläche 51 des zylindrischen Bereichs 48 des Abtriebs 29 verteilt sind. Die Aussparungen 52 sind vorzugsweise vertieft bzw. versenkt in der Mantelfläche 51 im Abtrieb 29 ausgebildet.

Bevorzugterweise weist der Abtrieb 29 eine Führungsbahn 53 auf, welche als rillenförmige Vertiefung im Abtrieb ausgebildet ist (s. Fig. 5). Die Vertiefung der Führungsbahn 53 ist vorzugsweise ringförmig und an einer Grundfläche 54 des zylindrischen Bereichs 48 des Abtriebs 29 ausgebildet. Die Grundfläche 54 mit der Führungsbahn 53 ist vorzugsweise gegenüberliegend zur Grundfläche 49, welche die Zahnradkontur 50 aufweist, ausgebildet.

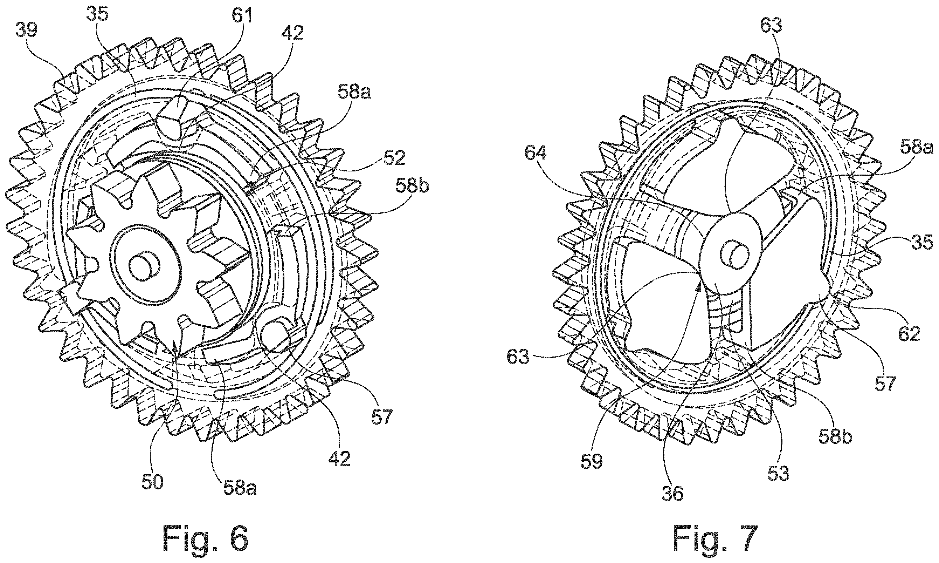

Der Abtrieb 29 ist vorzugsweise im Innenraum des Antriebs 28 angeordnet, wobei die Mantelfläche 51 des zylindrischen Bereichs 48 des Abtriebs 29 vorteilhafterweise gegenüberliegend zur Oberfläche der ringförmigen Platte 41 des Antriebs 28 angeordnet ist (s. Fig. 7). Vorteilhafterweise ist die Zahnradkontur 50 des Abtriebs 29 höhenversetzt zur Zahnradkontur 39 des Antriebs 28 angeordnet (s. Fig. 4). Bevorzugterweise überragt die Zahnradkontur 51 des Abtriebs 29 die Oberfläche des kreisringförmigen Plattenelements 43 des Antriebs 28.

Bevorzugterweise ist eine Wälzfläche 64 das Abrollelement 36 zylindrisch ausgebildet. Das Abrollelement ist insbesondere als Hohlzylinder ausgebildet. Bevorzugterweise ist das Abrollelement 36 an der Grundfläche 54 des zylindrischen Bereichs 48 des Abtriebs 29 angeordnet (s. Fig. 5). Das Abrollelement 36 ist vorzugsweise fest mit dem Kopplungselement 33 verbunden und unbeweglich ausgebildet. Weiter kann im Hohlraum 55 des Hohlzylinders des Abrollelements 36 ein Verbindungselement 56 angeordnet sein, welches das Abrollelement 36 mit dem Abtrieb 29 verbindet (s. Fig. 4 und 5), wobei um das Verbindungselement 56 nur der Abtrieb 29 drehbar ist.

Die Sperrklinke 30 umfasst vorzugsweise ein Verbindungsabschnitt 57, ein Klinkenabschnitt 58a, 58b und ein Führungsabschnitt 59. Die Sperrklinke 30 ist vorzugsweise spiegelsymmetrisch ausgebildet ist, wobei vorteilhafterweise die Spiegelebene durch die Mitte der Sperrklinke 30 verläuft. Bevorzugterweise verläuft die Spiegelebene mittig durch den Verbindungsabschnitt 57 und den Führungsabschnitt 59. Die Sperrklinke 30 weist beispielsweise zwei gleiche Hälften auf. Die Sperrklinke 30 ist vorzugsweise zwischen dem Antrieb 28 und dem Abtrieb 29 angeordnet, wobei der Verbindungsabschnitt 57 der Sperrklinke 30 in der Ausnehmung 42 des Antriebs 28 aufgenommen ist und der Klinkenabschnitt 58a, 58b an der Mantelfläche 51 des zylindrischen Bereichs 48 des Abtriebs 29 angeordnet ist.

An der Sperrklinke 30 ist vorzugsweise mittig der Verbindungsabschnitt 57 ausgebildet, mit welchem die Sperrklinke in der Ausnehmung 42 des Antriebs 28 aufgenommen ist. Bevorzugterweise ist die Form der Ausnehmung 42 auf die Außenkontur des Verbindungsabschnitts 57 angepasst. Der Bereich 60 des Verbindungsabschnitts 57, welcher in der halbkreisförmigen Ausnehmung 42 bzw. auf der Auflagefläche 46 des Antriebs 28 aufliegt, ist vorzugsweise konvex ausgebildet (s. Fig. 4). Weiter weist vorzugweise der Verbindungabschnitt 57 der Sperrklinke 30 einen Vorsprung 61 auf, wobei der Vorsprung 61 beispielsweise trapezförmig ausgestaltet ist. Der Verbindungsabschnitt 57 liegt vorzugsweise mit seinem Vorsprung 61 an der Oberseite 47 des Hohlzylinders 38 des Antriebs 28 an (s. Fig. 4). An dem Verbindungsabschnitt 57 ist vorzugsweise eine beispielsweise konvexe Auflageoberfläche 62 ausgebildet. Die Auflageoberfläche 62 ist bevorzugterweise gegenüberliegend zum Bereich 60 des Verbindungsabschnitts 57, welcher in der Ausnehmung 42 im Antrieb 28 aufliegt. Die Auflageoberfläche 62 des Verbindungsabschnitts 57 liegt vorzugsweise an der inneren Mantelfläche 40 des Hohlzylinders 38 des Zahnradbereichs 37 des Antriebs 28 an.

Die Sperrklinke 30 weist vorzugsweise zwei Klinkenabschnitte 58a, 58b auf, wobei die Klinkenabschnitte 58a, 58b an gegenüberliegenden Enden der Sperrklinke 30 angeordnet sind. Vorteilhafterweise ist die Sperrklinke 30 derart ausgestaltet, dass der erste Klinkenabschnitt 58a bei einer Drehung des Antriebs 28 nach rechts in eine Aussparung 52 am Abtrieb 29 einhakt und der zweite Klinkenabschnitt 58b bei einer Drehung des Antriebs 28 nach links in eine Aussparung 52 am Abtrieb 29 einhakt.

Der Führungsabschnitt 59 der Sperrklinke 30 taucht vorteilhafterweise in die Führungsbahn 53 ein und wird beispielsweise komplett in der Führungsbahn 53 aufgenommen (s. Fig. 5). Der Führungsabschnitt 59 hat vorzugsweise eine annähernd dreieckige Form bzw. ist annähernd als gleichschenkliges Dreieck ausgebildet, wobei die Schenkel leicht nach außen gewölbt bzw. konvex sind. Die andere Seite des Führungsabschnitts 59 weist vorzugsweise eine Abrollfläche 63 auf. Bevorzugterweise liegt an der zylindrischen Wälzfläche 64 des Abrollelements 36 die Abrollfläche 63 der Sperrklinke 30 dauerhaft auf (s. Fig. 5, 7, 9).

Das Federelement 35 ist vorzugsweise als annähernd kreisförmiger Federdraht ausgebildet, wobei das Federelement 35 einen Abstand zwischen Anfangsabschnitt und Endabschnitt aufweist, so dass das Federelement 35 verengt und geweitet werden kann. Das Federelement 35 liegt vorzugsweise auf der Auflageoberfläche 62 des Verbindungsabschnitts 57 der Sperrklinke 30 auf. Das Federelement 35 ist vorzugsweise in Richtung des Abtriebs 29 geladen bzw. vorgespannt, wodurch die die Abrollfläche 63 der Sperrklinke 30 gegen das Abrollelement 36 bzw. die Wälzfläche 64 des Abrollelements 36 dauerhaft gedrückt wird. Vorteilhafterweise ist das Federelement 35 zwischen dem Vorsprung 61 des Verbindungsabschnitts 57 der Sperrklinke 30 und der Oberseite 47 des Hohlzylinders 38 des Zahnradbereichs 37 des Antriebs 28 angeordnet (s. Fig. 4).

Die Sperrklinken 30 werden bevorzugterweise durch die Aufnahme des Verbindungsabschnitts 57 der Sperrklinken 30 in den Ausnehmungen 42 am Antrieb 28 in die gleiche Drehrichtung wie der Antrieb 28, um die Drehachse D, gedreht. Die Drehachse D verläuft vorteilhafterweise parallel zur Höhe des zylindrischen Bereichs 48 des Abtriebs 29. Bei der Drehbewegung des Antriebs 28 und damit auch der Sperrklinken 30, rollt die Abrollfläche 63 des Führungsabschnitts 59 der Sperrklinken 30 an der Wälzfläche 64 des Abrollelements 36 ab, wodurch die Sperrklinken 30 verschwenkt werden. Wird beispielsweise der Antrieb 28 nach rechts gedreht, verschwenken die Sperrklinken 30 nach rechts. Dabei gelangen ein erster Klinkenabschnitt 58a der Sperrklinken 30 jeweils in eine Aussparung 52 am Abtrieb 29, wodurch der Abtrieb 29 mit dem Antrieb 28 gekoppelt wird (s. Fig. 4 und 5). So werden der Antrieb 28, die Sperrklinken 30 und der Abtrieb 29 in dem gekoppelten Zustand in die gleiche Drehrichtung mit dem gleichen Drehmoment gedreht.

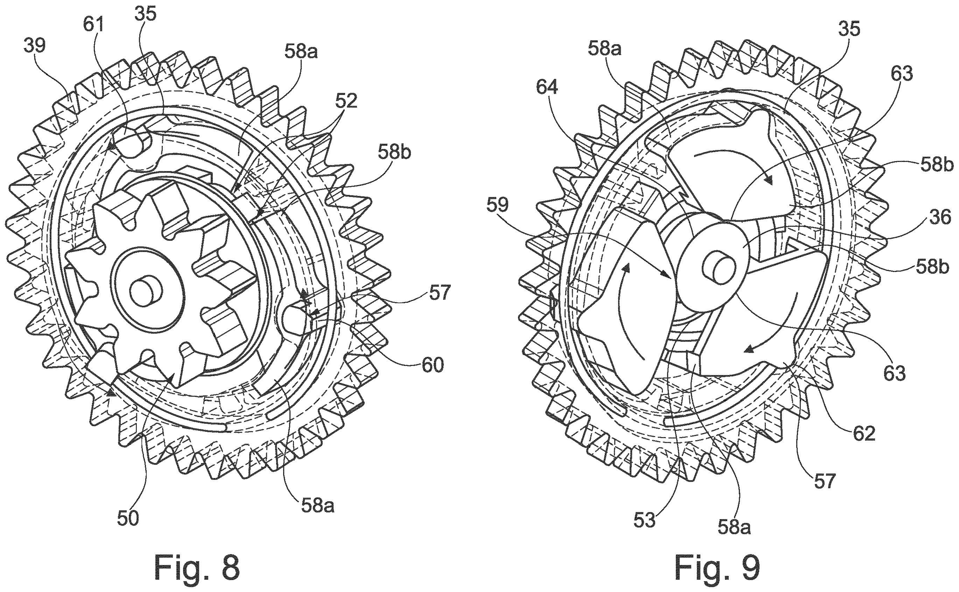

Wird die Drehrichtung des Antriebs 28 umgekehrt, also wird der Antrieb 28 nach einer Rechtsdrehung nach links gedreht, rollen die Abrollflächen 63 des Führungsabschnitts 59 der Sperrklinken 30 am Abrollelement 36 in die entgegengesetzte Richtung. So werden die Sperrklinken 30 aus den jeweiligen Aussparungen 52 am Abtrieb 29 herausgeschwenkt. Dadurch wird die Kopplung zwischen Antrieb 28 und Abtrieb 29 aufgehoben (s. Fig. 6 und 7). Bei weitere Drehung des Antriebs 28 nach links, rollen die Abrollflächen 63 der Sperrklinken 30 weiter auf dem Abrollelement 36 nach links, wodurch die zweiten Klinkenabschnitte 58b der Sperrklinken 57 in Eingriff mit jeweils einer Aussparung 52 am Abtrieb 29 kommen, wodurch der Antrieb 28 wieder mit dem Abtrieb 29 in eine entgegengesetzten Drehrichtung gekoppelt ist (s. Fig. 8 und 9). Sollte die Drehrichtung des Antriebs 28 anschließend nach rechts geändert werden, werden die zweiten Klinkenabschnitte 58b wieder aus den Aussparungen 52 am Abtrieb 29 herausgeschwenkt, womit der Abtrieb 29 wieder entkoppelt vom Antrieb 28 ist. Somit kann der Antrieb 28 mit dem Abtrieb 29 in beide Drehrichtungen gekoppelt oder entkoppelt werden.

Weiter können die Klinkenabschnitte 58a, 58b der Sperrklinke 57 aus den Aussparungen 52 herausbewegt bzw. herausgeschwenkt werden, wenn der Abtrieb 29 schneller als der Antrieb 28 in Drehrichtung bewegt wird oder wenn der Antrieb 28 stehen bleibt und der Abtrieb 29 bewegt wird. Auch ist eine Entkopplung mögliche, wenn der Abtrieb 29 stehen bleibt. Dies kann vorzugsweise geschehen, wenn ein Nutzer das bewegliche Möbelteil 3 schneller als durch den Motor 23 vorgegeben in Öffnungs- oder Schließrichtung bewegt oder das bewegliche Möbelteil 3 festhält.

### Bezugszeichenliste

1 Möbel
2 Möbelkorpus
3 Möbelteil
4 Seitenwand
5 Seitenwand
6 Unterboden
7 Oberboden
8 Rückwand
9 Möbelbeschlag
10 Beschlageinheit
11 Beschlageinheit
12 Basiseinheit
13Schwenkarm-Anordnung
14 Montageeinheit
15 Schwenkarm
16 Grundplatte
17 Stirnabschnitt
18 Aussparung
19 Gehäuse
20 Abdeckbauteil
21 Beschlaganordnung
22 Antriebsvorrichtung
23 Motor
24 Antriebswelle
25Übertragungselement
26 Getriebe
27 Kupplung
28 Antrieb
29 Abtrieb
30 Sperrklinke
31 Zahnrad
32 Hebel
33 Kopplungselement
34 Schalter
35 Federelement
36 Abrollelement
37 Zahnradbereich
38 Hohlzylinder
39 Zahnradkontur
40 Mantelfläche
41 Platte
42 Ausnehmung
43 Plattenelement
44 Innenkontur
45 Endkante
46Auflagefläche
47 Oberseite
48 Bereich
49 Grundfläche
50 Zahnradkontur
51 Mantelfläche
52 Aussparung
53 Führungsbahn
54 Grundfläche
55 Hohlraum
56Verbindungselement
57Verbindungsabschnitt
58 Klinkenabschnitt
59 Führungsabschnitt
60 Bereich
61 Vorsprung
62 Auflageoberfläche
63 Abrollfläche
64 Wälzfläche

## Patentansprüche

1. Kupplung (27) mit einem Antrieb (28), einem Abtrieb (29) und einer Sperrklinke (30), wobei, die Sperrklinke (30) mit dem Antrieb (28) verbunden ist und zwischen Antrieb (28) und Abtrieb (29) angeordnet ist, wobei durch die Bewegung des Antriebs (28) die Sperrklinke (30) schwenkkbar ist, **dadurch gekennzeichnet, dass** die Sperrklinke (30) derart ausgelegt ist, in beide Drehrichtungen eine Kopplung mit dem Abtrieb (29) herbeizuführen, wenn der Antrieb (28) eine Drehbewegung ausführt und eine Entkopplung ermöglicht ist, wenn der Antrieb (28) steht und der Abtrieb (29) eine Drehbewegung ausführt.

2. Kupplung nach Anspruch 1, **dadurch gekennzeichnet, dass** die Kupplung (27) einen einzigen Abtrieb (29) aufweist, wobei der Abtrieb (29) in beide Drehrichtungen drehbar ist.

3. Kupplung nach einem der vorangegangenen Ansprüche, **dadurch gekennzeichnet, dass** die Sperrklinke (30) einen Verbindungabschnitt (57) aufweist, wobei die Sperrklinke (30) mittels des Verbindungsabschnitts (57) am Antrieb (28) angeordnet ist.

4. Kupplung nach einem der vorangegangenen Ansprüche, **dadurch gekennzeichnet, dass** der Abtrieb (29) eine Aussparung (52) aufweist, wobei beim Kuppeln des Antriebs (28) mit dem Abtrieb (29) ein Klinkenabschnitt (58a, 58b) der Sperrklinke (30) in die Aussparung (52) eingreift.

5. Kupplung nach einem der vorangegangenen Ansprüche, **dadurch gekennzeichnet, dass** die Sperrklinke (30) zwei Klinkenabschnitte (58a,58b) aufweist, wobei die Klinkenabschnitte (58a, 58b) an zwei sich gegenüberliegenden Endbereichen der Sperrklinke (30) angeordnet sind.

6. Kupplung nach einem der vorangegangenen Ansprüche, **dadurch gekennzeichnet, dass** die Kupplung (27) ein feststehendes Abrollelement (36) umfasst, wobei am Abrollelement (36) ein Abrollfläche (63) der Sperrklinke (30) abrollt, wobei die Abrollfläche (63) am Abrollelement (36) in beide Drehrichtungen abrollbar ist, so dass die Sperrklinke (30) in beide Drehrichtungen schwenkbar ist.

7. Kupplung nach einem der vorangegangenen Ansprüche, **dadurch gekennzeichnet, dass** die Kupplung (27) ein Federelement (35) aufweist, wobei das Federelement (35) die Sperrklinke (30) gegen das Abrollelement (36) drückt.

8. Kupplung nach einem der vorangegangenen Ansprüche, **dadurch gekennzeichnet, dass** der Abtrieb (29) eine Führungsbahn (53) aufweist, wobei ein Führungsabschnitt (59) der Sperrklinke (30) in der Führungsbahn (53) des Abtriebs (29) angeordnet ist.

9. Kupplung nach einem der vorangegangenen Ansprüche, **dadurch gekennzeichnet, dass** die Sperrklinke (30) spiegelsymmetrisch ausgebildet ist.

10. Antriebsvorrichtung (22) mit einem elektrischen Motor (23) zum Bewegen eines beweglichen Möbelteils (3) relativ zu einem Möbelkorpus (2), wobei das Drehmoment des Motors (23) auf ein Möbelbeschlag (9) übertragbar ist, wobei die Drehbewegung des Motors (23) eine Bewegung des Möbelbeschlags (9) und damit des beweglichen Möbelteils (3) in Öffnungs- und Schließrichtung bewirkt, wobei die Antriebsvorrichtung (22) eine Kupplung (27) nach einem der vorangegangen Ansprüche aufweist.

11. Beschlaganordnung (21) mit einem Möbelbeschlag (9) zum Bewegen eines beweglichen Möbelteils (3) relativ zum Möbelkorpus (2) und einer Antriebsvorrichtung (22) nach Anspruch 10 zum angetriebenen Bewegen des Möbelbeschlags (9) .

12. Möbel (1) mit einer Beschlaganordnung (21) nach Anspruch 11, wobei durch die Beschlaganordnung (21) ein bewegliches Möbelteil (3) relativ zu einem Möbelkorpus (2) motorisch angetrieben bewegbar ist.

## Claims

1. Coupling (27) having a drive input (28), an output (29) and a locking pawl (30), wherein the locking pawl (30) is connected to the drive input (28) and is arranged between the drive input (28) and the output (29), wherein the locking pawl (30) can be pivoted as a result of the movement of the drive input (28), **characterized in that** the locking pawl (30) is designed such that it establishes a coupling to the output (29) in both rotational directions when the drive input (28) performs a rotational movement and decoupling is enabled when the drive input (28) is stationary and the output (29) performs a rotational movement.

2. Coupling according to Claim 1, **characterized in that** the coupling (27) has a single output (29), wherein the output (29) is rotatable in both rotational directions.

3. Coupling according to either of the preceding claims, **characterized in that** the locking pawl (30) has a connecting portion (57), wherein the locking pawl (30) is arranged on the drive input (28) by means of the connecting portion (57).

4. Coupling according to one of the preceding claims, **characterized in that** the output (29) has a cutout (52), wherein a pawl portion (58a, 58b) of the locking pawl (30) engages in the cutout (52) when the drive input (28) is coupled to the output (29).

5. Coupling according to one of the preceding claims, **characterized in that** the locking pawl (30) has two pawl portions (58a, 58b), wherein the pawl portions (58a, 58b) are arranged on opposite end regions of the locking pawl (30) .

6. Coupling according to one of the preceding claims, **characterized in that** the coupling (27) comprises a stationary rolling element (36), wherein a rolling surface (63) of the locking pawl (30) rolls on the rolling element (36), wherein the rolling surface (63) can roll on the rolling element (36) in both rotational directions, such that the locking pawl (30) can be pivoted in both rotational directions.

7. Coupling according to one of the preceding claims, **characterized in that** the coupling (27) has a spring element (35), wherein the spring element (35) presses the locking pawl (30) against the rolling element (36).

8. Coupling according to one of the preceding claims, **characterized in that** the output (29) has a guide track (53), wherein a guide portion (59) of the locking pawl (30) is arranged in the guide track (53) of the output (29) .

9. Coupling according to one of the preceding claims, **characterized in that** the locking pawl (30) is mirror-symmetrical.

10. Drive device (22) having an electric motor (23) for moving a movable furniture part (3) relative to a furniture body (2), wherein the torque of the motor (23) can be transmitted to a furniture fitting (9), wherein the rotational movement of the motor (23) causes the furniture fitting (9) and thus the movable furniture part (3) to move in an opening direction and a closing direction, wherein the drive device (22) has a coupling (27) according to one of the preceding claims.

11. Fitting arrangement (21) having a furniture fitting (9) for moving a movable furniture part (3) relative to the furniture body (2) and a drive device (22) according to Claim 10 for driving the movement of the furniture fitting (9).

12. Item of furniture (1) with a fitting arrangement (21) according to Claim 11, wherein, by virtue of the fitting arrangement (21), a movable furniture part (3) can be driven in movement relative to a furniture body (2) by a motor.

## Revendications

1. Accouplement (27) avec un entraînement (28), une sortie (29) et un cliquet d'arrêt (30), le cliquet d'arrêt (30) étant relié à l'entraînement (28) et étant agencé entre l'entraînement (28) et la sortie (29), le cliquet d'arrêt (30) pouvant pivoter par le mouvement de l'entraînement (28), **caractérisé en ce que** le cliquet d'arrêt (30) est conçu de manière à provoquer un accouplement avec la sortie (29) dans les deux directions de rotation lorsque l'entraînement (28) exécute un mouvement de rotation et à permettre un désaccouplement lorsque l'entraînement (28) est à l'arrêt et que la sortie (29) exécute un mouvement de rotation.

2. Accouplement selon la revendication 1, **caractérisé en ce que** l'accouplement (27) présente une seule sortie (29), la sortie (29) pouvant tourner dans les deux directions de rotation.

3. Accouplement selon l'une quelconque des revendications précédentes, **caractérisé en ce que** le cliquet d'arrêt (30) présente une section de liaison (57), le cliquet d'arrêt (30) étant agencé sur l'entraînement (28) au moyen de la section de liaison (57) .

4. Accouplement selon l'une quelconque des revendications précédentes, **caractérisé en ce que** la sortie (29) présente un évidement (52), une section de cliquet (58a, 58b) du cliquet d'arrêt (30) s'engageant dans l'évidement (52) lors de l'accouplement de l'entraînement (28) avec la sortie (29).

5. Accouplement selon l'une quelconque des revendications précédentes, **caractérisé en ce que** le cliquet d'arrêt (30) présente deux sections de cliquet (58a, 58b), les sections de cliquet (58a, 58b) étant agencées sur deux zones d'extrémité opposées du cliquet d'arrêt (30) .

6. Accouplement selon l'une quelconque des revendications précédentes, **caractérisé en ce que** l'accouplement (27) comprend un élément de déroulement fixe (36), une surface de déroulement (63) du cliquet d'arrêt (30) se déroulant sur l'élément de déroulement (36), la surface de déroulement (63) pouvant se dérouler sur l'élément de déroulement (36) dans les deux directions de rotation, de telle sorte que le cliquet d'arrêt (30) peut pivoter dans les deux directions de rotation.

7. Accouplement selon l'une quelconque des revendications précédentes, **caractérisé en ce que** l'accouplement (27) présente un élément à ressort (35), l'élément à ressort (35) poussant le cliquet d'arrêt (30) contre l'élément de déroulement (36).

8. Accouplement selon l'une quelconque des revendications précédentes, **caractérisé en ce que** la sortie (29) présente une piste de guidage (53), une section de guidage (59) du cliquet d'arrêt (30) étant agencée dans la piste de guidage (53) de la sortie (29).

9. Accouplement selon l'une quelconque des revendications précédentes, **caractérisé en ce que** le cliquet d'arrêt (30) est réalisé sous forme symétrique.

10. Dispositif d'entraînement (22) avec un moteur électrique (23) pour déplacer une partie de meuble mobile (3) par rapport à un corps de meuble (2), le couple du moteur (23) pouvant être transmis à une ferrure de meuble (9), le mouvement de rotation du moteur (23) provoquant un mouvement de la ferrure de meuble (9) et donc de la partie de meuble mobile (3) dans une direction d'ouverture et de fermeture, le dispositif d'entraînement (22) présentant un accouplement (27) selon l'une quelconque des revendications précédentes.

11. Agencement de ferrure (21) avec une ferrure de meuble (9) pour déplacer une partie de meuble mobile (3) par rapport au corps de meuble (2) et un dispositif d'entraînement (22) selon la revendication 10 pour déplacer de manière entraînée la ferrure de meuble (9).

12. Meuble (1) avec un agencement de ferrure (21) selon la revendication 11, une partie de meuble mobile (3) pouvant être déplacée de manière entraînée par moteur par rapport à un corps de meuble (2) par l'agencement de ferrure (21).
